# EUROPÄISCHE PATENTSCHRIFT

(11) **EP 2 870 062 B1**
(45) Veröffentlichungstag und Bekanntmachung des Hinweises auf die Patenterteilung: **15.01.2020**
(21) Anmeldenummer: 13753270.1
(22) Anmeldetag: 03.07.2013
(51) Int. Cl.: B63B 25/22, B63B 25/24, B63B 27/10

(54) **SCHIFFSLADEANORDNUNG**
VESSEL STOWING ARRANGEMENT
PLAN D'ARRIMAGE DE CARGAISON DE NAVIRE

(30) Priorität: 03.07.2012 DE 202012006349 U
(43) Veröffentlichungstag der Anmeldung: 13.05.2015
(73) Patentinhaber: Schuster Engineering GmbH, 87746 Erkheim (DE)
(72) Erfinder: SCHUSTER, Thomas, 87754 Kammlach (DE)
(74) Vertreter: Fiener, Josef
(86) Internationale Anmeldenummer: PCT/EP2013/001951
(87) Internationale Veröffentlichungsnummer: WO 2014/005704

(56) Entgegenhaltungen:
- DE-U1-202010 003 363
- US-A- 4 324 190

## Beschreibung

Die Erfindung betrifft eine Schiffsladeanordnung für Ballen, insbesondere verpackte Müll-Rundballen.

Derartige Müll-Rundballen oder Brennstoff-Ballen, aber auch Erntegutballen oder Ballen aus nachwachsenden Rohstoffen werden über längere Strecken zunehmend mit Frachtschiffen transportiert. Die Ballen werden hierbei im meist offenen Schiffsrumpf mit einen Hafenkran nebeneinander gestapelt. Neben der stehenden Anordnung der Ballen (Wickelachse von Rundballen ist hierbei vertikal) wird häufig die liegende Ladeanordnung gewählt, da hierbei mehrere Ballen zugleich mit einer Zange in Art eines abgewandelten Holzgreifers an den Stirnseiten gegriffen werden können. Im Allgemeinen werden hier zwei achsgleich hintereinander liegende Ballen stimseitig aneinander gedrückt, so dass solche Doppel-Ballen exakt in benachbarten Reihen im Schiff abgelegt werden können. Bei Rundballen sind die einzelnen Schichten dabei um den halben Durchmesser versetzt, so dass die Ballen in der Senke zwischen den jeweils darunter befindlichen Ballen zentriert werden. Hierdurch lassen sich z. B. zehn Schichten übereinander stapeln, wobei die so gebildeten Stapel auch bei Seegang relativ lagestabil sind.

Das Entladen erfolgt wiederum mit einem Greifer bzw. Kranzange, wobei zur zügigen Entladung und Reduzierung der Liegezeiten des Schiffs auch zwei (oder mehr) Ballen gleichzeitig gegriffen und transportiert werden. Das Eintauchen der Greiferzangen in den Ballenstapel gestaltet sich trotz schmaler Bauweise der Zangen jedoch schwierig, da die Ballen eng aneinander liegen und somit die Wickelfolie der so verpackten Ballen beschädigt werden kann. Dies verursacht Schmutz und erhebliche Zeitverluste durch dann erforderliche Aufräum- und Reinigungsarbeiten. Selbst das Anbringen von Rollen oder ähnlichen Elementen zur Reibungsreduzierung an den Außenseiten der Greiferzangen hat die Beschädigung der Ballen beim Eintauchen insbesondere am Beginn einer Ballenschicht kaum verringern können.

DE20 2010 003 363 U1 offenbart eine Vorrichtung zum Stapeln von Mauer- oder Bausteinen auf einem Transportwagen, wobei eine Stapellage mit einem Stapelkörper vorgesehen ist, der zu den anderen Stapelkörpern dieser Stapellage wenigstens annähernd orthogonaler angeordnet ist.

Daher liegt der Erfindung die Aufgabe zugrunde, eine Schiffsladeanordnung für Ballen zu schaffen, die eine schonende Entladung und sicheres Ergreifen ermöglicht.

Diese Aufgabe wird gelöst durch eine Schiffsladeanordnung mit den Merkmalen des Anspruches 1. Bevorzugte Ausführungen sind Gegenstand der Unteransprüche. Bei der nun vorgeschlagenen Ladeanordnung mit einer Vielzahl von Ballen, insbesondere verpackten Müll-Rundballen, sind die Ballen in Mehrfach-Querreihen, insbesondere in Doppelreihen im Schiffsrumpf gestapelt sind, zwischen denen jeweils ein rechtwinklig dazu verdreht ausgerichteter Ballenstapel angeordnet ist. Bevorzugt ist dieser Ballenstapel aus aufeinander geschichteten Ballen in Einzel- oder Doppelanordnung gebildet. Durch diesen Wechsel in der Ausrichtung (z. B. zwei längs/einer oder zwei quer zur Schiffsachse) kann die Greiferzange auf die Ballen ohne wesentlichen Reibungskontakt zugreifen, so dass Beschädigungen praktisch ausgeschlossen sind. Der Zugriff kann zudem dadurch verbessert werden, dass der Ballenstapel in Querrichtung des Schiffsrumpfs zu diesem und nach jeweils zwei Ballen eine stirnseitige Lücke aufweist. Da dieser Abstand nur etwa 5% der Ballenbreite beträgt, ist der Transportraumverlust minimal, da die Ballen in den Mehrfach-Querreihen mit der maximalen Packungsdichte gestapelt sind.

Da bei dieser Ladeanordnung im Schiff die Ballenstapel und die Doppel-Querreihen pro Schicht um den halben Durchmesser gegeneinander versetzt sind, ergibt sich eine gegenseitige Abstützung und damit Stabilität der Fracht auch bei schwerem Seegang. Dies erleichtert auch die schnelle und saubere Entladung am Zielhafen. Um den Wechsel in der Ausrichtung der Ballenachsen rasch anpassen zu können, ist die Greifzange relativ zur Hauptrichtung des Umschlaggeräts (Ausleger-Hydraulikbagger) oder Krans um 90° vorpositionierbar, z. B. mit entsprechenden Drehanschlägen, so dass der Bagger- oder Kranführer bei seiner Arbeit entlastet wird, also kaum auf die Ausrichtung der Greifzange zu der jeweiligen Ballenlage achten muss. Eine Feinpositionierung der Greifzange kann auch durch Sensoren erleichtert werden, die die Position und Ausrichtung der Greifzange zu den Ballen z. B. mit Ultraschall oder Laserabtastung überwacht.

Nachfolgend wird ein bevorzugtes Ausführungsbeispiel anhand der Zeichnungen beschrieben. Hierbei zeigen:
- Fig. 1: eine Seitenansicht einer Schiffsladeanordnung;
- Fig. 2: eine Querschnittsansicht durch den Schiffrumpf;
- Fig. 3: eine Draufsicht auf das beladene Schiff;
- Fig. 4: eine Perspektivansicht zu der Ausführung nach Fig. 1 bis 3;
- Fig. 5: eine Seitenansicht einer abgewandelten Schiffsladeanordnung;
- Fig. 6: eine Draufsicht zu der Ausführung nach Fig. 6; und
- Fig. 7: eine Perspektivansicht zu Fig. 5 und 6.

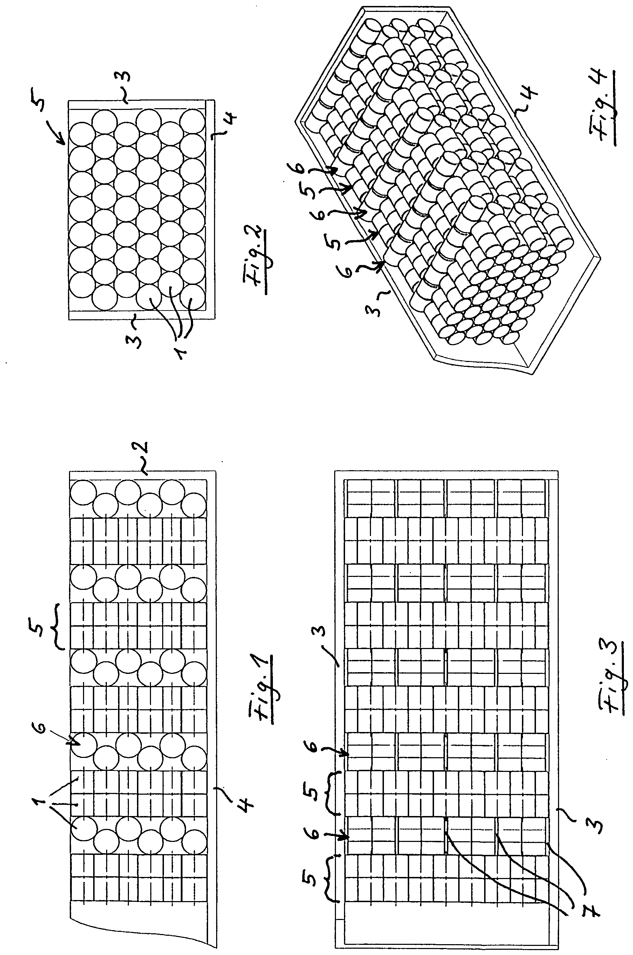

In Fig. 1 ist ein Ausführungsbeispiel einer Ladeanordnung mit einer Vielzahl von Ballen 1, insbesondere verpackten Müll-Rundballen gezeigt, die in einem Schiffsrumpf 2 gestapelt sind. Der Schiffsrumpf 2 besitzt in herkömmlicher Weise einen flachen Boden 4 und Seitenwände 3 (vgl. Fig. 2 und 3), die auch zusätzliche Schottwände aufweisen können. Die Ballen 1 sind hier in Mehrfach-Querreihen 5, insbesondere in Doppelreihen aufgestapelt wobei zwischen den Doppelreihen 5 jeweils ein rechtwinklig in der Horizontalen verdreht ausgerichteter Ballenstapel 6 vorgesehen ist. Die Doppelreihen 5 sind in der bevorzugten Ausführung als Rundballen schichtweise jeweils um den halben Durchmesser versetzt, wie aus Fig. 2 ersichtlich, so dass sich eine hohe Packungsdichte ergibt.

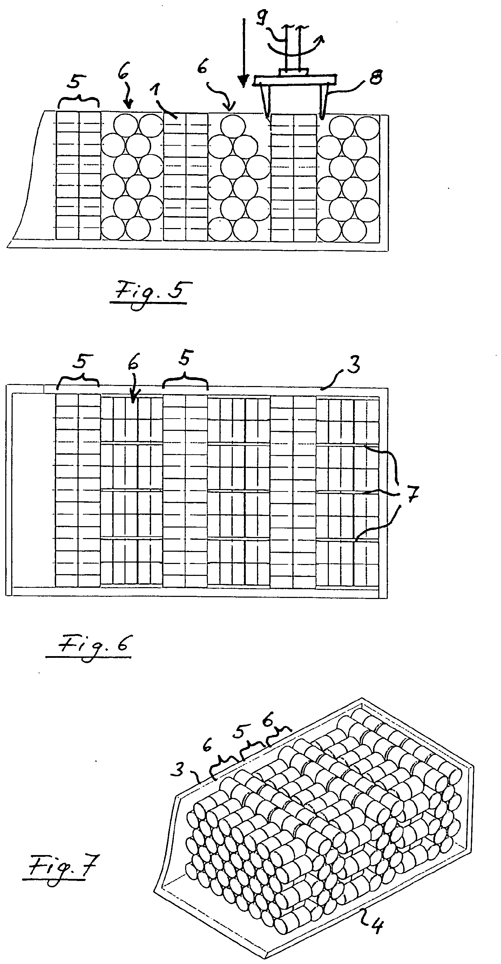

Aus der Draufsicht in Fig. 3 ist die Schiffsladeanordnung mit abwechselnder Stapelung der Doppelreihen 5 und Ballenstapel 6 erkennbar, ebenso in der Perspektive in Fig. 4. Zudem ist für den Ballenstapel 6 ersichtlich, dass in Querrichtung des Schiffsrumpfs 2 zu dessen Seitenwänden 3 und nach jeweils zwei Ballen 1 eine stirnseitige Lücke 7 vorgesehen ist. Hierdurch kann eine Greifzange 8 (vgl. Fig. 5) in diesen Abstand eintauchen und zumindest einen Ballen 1 des Ballenstapels 6 greifen und aus der jeweils obersten Schicht nach oben herausheben. Diese Lücke 7 beträgt nur etwa 5% der Ballenbreite (in Schiffsquerrichtung), so dass die Gesamtdichte der Fracht bei gegenseitiger Abstützung der Ballen kaum verringert wird.

Dies gilt insbesondere für die in Fig. 5 dargestellte Doppelanordnung der Ballenstapel 6, während in Fig. 1 bis 4 die quer zur Schiffsachse ausgerichteten Ballen 1 (mit praktisch beliebigem Ballenformat) im Ballenstapel einzeln aufeinander geschichtet sind. In Fig. 5 bis 7 kann die Greifzange 8 somit jeweils zwei Ballen 1 greifen, sowohl aus dem Ballenstapel 6 als auch aus den Doppel- oder Mehrfach-Querreihen 5. Hierzu wird die am ansatzweise angedeuteten Umschlaggerät 9 befestigte Greifzange 8 in der Horizontalen um 90° verschwenkt, bevorzugt gegen Anschlagpunkte, um die Greifzange 8 passend zur Ballenlage auszurichten. Wie aus Fig. 5 erkennbar, kann bei dieser Stapelanordnung die hier rechte Greifbacke der Greifzange 8 unbehindert an der Stirnseite des hier rechten Ballens 1 abgesenkt werden, während an der linken Seite zumindest ein Ballen 1 aus der obersten Schicht des Ballenstapels 6 entnommen wurde, so dass auch die linke Greifbacke ungehindert abgesenkt werden kann. Nach Abtauchen der Greifzange 8 bis zum unteren Bereich der Ballenlage kann somit ein Doppelballen aus der Doppel-Querreihe 5 sicher und ohne Beschädigung entnommen werden. Dabei empfiehlt es sich, beim Entladen zunächst die jeweils oberste Schicht des Ballenstapels 6 über das gesamte Schiff hinweg vorzunehmen, damit die Greifzange 8 so wenig wie möglich verschwenkt wird.

Die beschriebene Ladeanordnung ermöglicht somit ein schonendes und schnelles Entladen des Schiffes, wobei bevorzugt immer zwei (oder mehr) Ballen mit der Greifzange 8 erfasst werden. Für den Wechsel zwischen den Ballenlagen kann die Greifzange 8 relativ zur Hauptentladerichtung des Krans oder Umschlaggeräts 9 um 90° verschwenkt werden. Dabei können auch mehrere Ballenstapel 6 um je eine Ballenschicht abgetragen werden, bevor dann die Ballen 1 wieder bevorzugt paarweise aus den Mehrfach-Querreihen 5 abtransportiert werden. Die Beladung des Schiffes erfolgt analog, so dass die Schwenkvorgange der Greifzange 8 um 90° in der Horizontalebene nicht zu häufig sind. An der Greifzange 8 können auch Positionierhilfen wie Laser vorgesehen sein, insbesondere zur exakt reproduzierbaren Positionierung zur jeweiligen Ballenlage.

## Patentansprüche

1. Schiffsladeanordnung mit einer Vielzahl von Ballen, insbesondere verpackten Müll-Rundballen, die in einem Schiffsrumpf gestapelt sind und mit einem Kran bzw. Umschlaggerät be- oder entladbar sind, vorzugsweise mit einer Greifzange zum Greifen von jeweils zwei Ballen, wobei die Ballen (1) in Mehrfach-Querreihen (5), insbesondere Doppelreihen aufgestapelt sind, zwischen denen jeweils ein rechtwinklig in der Horizontalen verdreht ausgerichteter Ballenstapel (6) angeordnet ist,
**dadurch gekennzeichnet, dass**
der Ballenstapel (6) in Querrichtung des Schiffsrumpfs (2) zu dessen Seitenwänden (3) und nach jeweils zwei Ballen (1) eine stirnseitige Lücke (7) aufweist.

2. Schiffsladeanordnung nach Anspruch 1, **dadurch gekennzeichnet, dass** der Ballenstapel (6) aus aufeinander geschichteten Ballen in Einzel-, Doppel- oder Mehrfachanordnung gebildet ist.

3. Schiffsladeanordnung nach Anspruch 1, **dadurch gekennzeichnet, dass** die Lücke (7) etwa 5% bis 10% der Ballenbreite beträgt.

4. Schiffsladeanordnung nach einem der Ansprüche 1 bis 3, **dadurch gekennzeichnet, dass** der Ballenstapel (6) und/oder die Doppel- oder Mehrfach-Querreihen (5) pro Schicht gegeneinander versetzt sind.

5. Schiffsladeanordnung nach Anspruch 4, **dadurch gekennzeichnet, dass** bei der Ausführung mit Rundballen (1) die Schichten jeweils um den halben Ballen-Durchmesser versetzt sind.

6. Schiffsladeanordnung nach einem der Ansprüche 1 bis 5, **dadurch gekennzeichnet, dass** zum Entladen zunächst die oberste Schicht zumindest eines Ballenstapels (6) vorgesehen ist.

7. Schiffsladeanordnung nach einem der Ansprüche 1 bis 6, **dadurch gekennzeichnet, dass** die Greifzange (8) relativ zur Hauptent- oder -beladerichtung des Umschlaggeräts oder Krans (9) um 90° vorpositionierbar ist.

## Claims

1. Vessel stowing arrangement comprising a plurality of bales, in particular packaged garbage round bales that are stacked in a hull and can be loaded or unloaded by means of a crane or a handling device, preferably with gripper tongs for gripping two bales simultaneously, wherein the bales (1) are stacked in multiple transverse rows (5), in particular dual rows, between each of which a bale stack (6) is arranged in a right angled horizontally twisted manner,
**characterized in that** the bale stack (6) has an end-face gap (7) in the transverse direction of the hull (2) towards its sidewalls (3) and after two bales (1), each.

2. Vessel stowing arrangement according to claim 1, **characterized in that** the bale stack (6) is formed of stacked bales in single, double or multiple arrangement.

3. Vessel stowing arrangement according to claim 1, **characterized in that** the gap (7) is about 5% to 10% of the bale width.

4. Vessel stowing arrangement according to one of claims 1 to 3, **characterized in that** the bale stacks (6) and/or the double or multiple-transverse rows (5) have offset layers.

5. Vessel stowing arrangement according to claim 4, **characterized in that** the layers are offset by half the bale diameter as to round bales (1).

6. Vessel stowing arrangement according to one of claims 1 to 5, **characterized in that** for unloading operation the top layer of at least one bale stack (6) is removed first.

7. Vessel stowing arrangement according to one of claims 1 to 6, **characterized in that** the gripper tongs (8) are pre-positioned by 90° to the main unloading or loading direction of the handling device or crane (9).

## Revendications

1. Dispositif de chargement de navires, comprenant une multiplicité de ballots, en particulier des ballots ronds de déchets conditionnés qui sont empilés dans une coque de navire et peuvent être respectivement chargés ou déchargés à l'aide d'une grue ou d'un engin de transbordement, de préférence à l'aide d'une pince de préhension réalisée pour saisir deux ballots à chaque fois, lesdits ballots (1) étant empilés en des rangées transversales multiples (5), notamment des rangées doubles entre lesquelles est respectivement interposé un empilement (6) de ballots orienté avec déport à angle droit dans le sens horizontal,
**caractérisé par le fait que**
l'empilement (6) de ballots présente une discontinuité frontale (7) dans le sens transversal de la coque (2) du navire, vers les parois latérales (3) de cette dernière et en direction de deux ballots (1) respectifs.

2. Dispositif de chargement de navires, selon la revendication 1, **caractérisé par le fait que** l'empilement (6) de ballots est constitué de ballots superposés par couches en un agencement unique, double ou multiple.

3. Dispositif de chargement de navires, selon la revendication 1, **caractérisé par le fait que** la discontinuité (7) mesure d'environ 5 % à 10 % de la largeur des ballots.

4. Dispositif de chargement de navires, selon l'une des revendications 1 à 3, **caractérisé par le fait que** l'empilement (6) de ballots, et/ou les rangées transversales (5) doubles ou multiples, présente(nt) un décalage mutuel dans chaque couche.

5. Dispositif de chargement de navires, selon la revendication 4, **caractérisé par le fait que**, dans la réalisation comportant des ballots ronds (1), les couches sont respectivement décalées de la moitié du diamètre desdits ballots.

6. Dispositif de chargement de navires, selon l'une des revendications 1 à 5, **caractérisé par le fait que** la couche supérieure extrême d'au moins un empilement (6) de ballots est prévue, en premier lieu, pour le déchargement.

7. Dispositif de chargement de navires, selon l'une des revendications 1 à 6, **caractérisé par le fait que** la pince de préhension (8) peut être prépositionnée à 90° par rapport à la direction principale de déchargement ou de chargement de l'engin de transbordement, ou de la grue (9).
